(19) Europäisches Patentamt
European Patent Office
Office européen des brevets

(11) **EP 3 596 800 B1**

(12) **EUROPÄISCHE PATENTSCHRIFT**

(45) Veröffentlichungstag und Bekanntmachung des Hinweises auf die Patenterteilung:
**10.04.2024   Patentblatt 2024/15**

(21) Anmeldenummer: **18708930.5**

(22) Anmeldetag: **21.02.2018**

(51) Internationale Patentklassifikation (IPC):
**H02J 7/00** (2006.01)

(52) Gemeinsame Patentklassifikation (CPC):
**H02J 7/00712; H02J 7/007; H02J 7/007184;**
Y02E 60/10

(86) Internationale Anmeldenummer:
**PCT/EP2018/054226**

(87) Internationale Veröffentlichungsnummer:
**WO 2018/166768 (20.09.2018 Gazette 2018/38)**

(54) **LADEN EINES AKKUMULATORS**

CHARGING AN ACCUMULATOR

CHARGE D'UN ACCUMULATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2017   DE 102017204149**

(43) Veröffentlichungstag der Anmeldung:
**22.01.2020   Patentblatt 2020/04**

(73) Patentinhaber: **Robert Bosch GmbH**
**70442 Stuttgart (DE)**

(72) Erfinder:
- **SEDLMAYR, Andreas**
  **75173 Pforzheim (DE)**
- **KLEE, Christoph**
  **70599 Stuttgart (DE)**
- **SCHMID, Martin**
  **70180 Stuttgart (DE)**
- **SORHAGE, Constanze**
  **70771 Leinfelden-Echterdingen (DE)**
- **OSSWALD, Alexander**
  **70599 Stuttgart (DE)**

(56) Entgegenhaltungen:
**JP-A- 2004 282 881     US-A1- 2011 156 660**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft das Aufladen eines Akkumulators. Insbesondere betrifft die Erfindung eine Technik zur raschen Aufladung eines elektrochemischen Energiespeichers.

Stand der Technik

Ein Akkumulator ist dazu eingerichtet, auf der Basis elektrochemischer Prozesse aufgeladen zu werden, um elektrische Energie abgeben zu können. Dabei können unterschiedliche Technologien verwendet werden, beispielsweise ein Bleiackumulator oder ein Lithium-Ionen-Akkumulator. Zum Aufladen wird üblicherweise die CC/CV-Methode (Constant Current/Constant Voltage: Konstantstrom/Konstantspannung) verwendet. Während des Ladens wird eine Spannung an Klemmen des Akkumulators überwacht. In einer ersten Phase wird mit einem Konstantstrom geladen, bis die Klemmenspannung einen vorbestimmten Wert erreicht hat. Anschließend wird in einer zweiten Phase mit einer konstanten Spannung geladen, bis der Ladestrom unter einen vorbestimmten Schwellenwert abgesunken ist.

DE 10 2011 107 913 A1 schlägt vor, einen Ladestrom eines Akkumulators zu modulieren und aus der Antwort des Akkumulators dessen Innenwiderstand zu bestimmen. Der Innenwiderstand des Akkumulators kann jedoch von der Modulationsfrequenz abhängig sein. Die Ladung kann dementsprechend unvollständig oder nicht mit der maximal möglichen Geschwindigkeit erfolgen.

Die Veröffentlichungen JP2004282881A und US2011/156660A1 beschreiben jeweils Ladeverfahren für Lithium-Ionen-Akkumulatoren, wobei nach einer Ladephase bis zu einer vorbestimmten Klemmenspannung ein zeitabhängiger Spannungsabfall der Klemmenspannung bei abgeschaltetem Ladestrom ermittelt wird, anschließend ein zweiter Sollwert für die Klemmenspannung auf der Basis des Spannungsabfalls bestimmt wird, und wobei anschließend der Akkumulator mittels eines vorbestimmten Stroms oder einer vorbestimmten elektrischen Leistung geladen wird, bis die Klemmenspannung des Akkumulators den zweiten Sollwert erreicht hat.

Eine der vorliegenden Erfindung zugrundeliegende Aufgabe besteht darin, eine verbesserte Technik zum Aufladen eines Akkumulators anzugeben. Die Erfindung löst diese Aufgabe mittels der Gegenstände der unabhängigen Ansprüche. Unteransprüche geben bevorzugte Ausführungsformen wieder.

Offenbarung der Erfindung

Ein Verfahren zum Aufladen eines Akkumulators mit Klemmen, an denen eine Klemmenspannung anliegt, umfasst Schritte des (a) Ladens des Akkumulators mittels eines vorbestimmten Stroms oder einer vorbestimmten elektrischen Leistung, bis die Klemmenspannung einen vorbestimmten ersten Wert erreicht hat; (b) des Bestimmens eines zeitabhängigen Abfalls der Klemmenspannung des Akkumulators bei verändertem Ladestrom; (c) des Bestimmens eines zweiten Werts auf der Basis des Spannungsverlusts, wobei der zweite Wert größer als der erste Wert ist; und (d) des Ladens des Akkumulators mittels eines vorbestimmten Stroms oder einer vorbestimmten elektrischen Leistung, bis die Klemmenspannung des Akkumulators den zweiten Wert erreicht hat.

Wird der Akkumulator lediglich auf eine beispielsweise vom Hersteller angegebene, empfohlene Ladeschlussspannung aufgeladen und anschließend vom Ladestrom getrennt, so sinkt seine Klemmenspannung aufgrund von elektrochemischen Vorgängen innerhalb des Akkumulators um einen gewissen Betrag. Durch das beschriebene Verfahren wird das Ausmaß dieses Absinkens bestimmt und das Laden möglichst derart fortgesetzt, dass die elektrochemischen Effekte kompensiert werden. Der Akkumulator kann nach Abschließen des Ladevorgangs voll aufgeladen sein und der Ladevorgang kann um ca. 35 bis 45 % kürzer als eine Aufladung nach der CC/CV-Methode sein. Die Zeitersparnis kann unter bestimmten Umständen sogar noch größer sein. Dabei kann der Akkumulator schonend aufgeladen werden, so dass seine Gesamtkapazität auch über viele Ladevorgänge hinweg nicht oder nur wenig abnimmt. Das Aufladen im Schritt (a) kann in bekannter Weise erfolgen, so dass eine erprobte und als sicher anerkannte Technologie eingesetzt werden kann. Das Bestimmen des zeitabhängigen Abfalls im Schritt (b) kann sehr rasch durchgeführt werden. In einer Ausführungsform wird hierfür nur eine Zeit im Bereich von ca. 100 ms bis ca. 1,5 s verwendet. Durch die individuelle Bestimmung des zeitabhängigen Abfalls können individuelle Einflüsse auf elektrochemische Vorgänge des Akkumulators berücksichtigt werden. Beispielsweise können eine Alterung oder geänderter Innenwiderstand des Akkumulators berücksichtigt werden. Das weitere Laden des Ackumulators im Schritt (d) kann eine rasche Aufladung des Akkumulators bis zum Erreichen seiner maximalen Kapazität sicherstellen. Für das Bestimmen des zweiten Werts im Schritt (c) werden unten verschiedene Vorschläge gemacht.

Das Verfahren kann grundsätzlich an jeder Art von Akkumulator, also an jedem elektrochemischen Energiespeicher, eingesetzt werden. Insbesondere kann das Verfahren vorteilhaft in Verbindung mit einem Lithium-Ionen-Akkumulator oder einem Nickel-Metallhydrid-Akkumulator durchgeführt werden. Der Akkumulator kann eine oder mehrere Zellen aufweisen.

In einer weiter bevorzugten Ausführungsform entspricht der erste Wert einer vom Hersteller des Akkumulators empfohlenen Ladeschlussspannung für das CC/CV-Ladeverfahren. Der Akkumulator kann so relativ schonend und schnell aufgeladen werden.

Es ist laut der in den unabhängigen Ansprüchen definierten Erfindung vorgesehen, dass der zeitabhängige Abfall der Klemmenspannung über eine Zeit bestimmt wird, die von einer Temperatur des Akkumulators abhängig ist. Mit steigender Temperatur des Akkumulators können die elektrochemischen Vorgänge beschleunigt ablaufen. Der zeitabhängige Abfall der Klemmenspannung kann daher bei einem warmen Akkumulator größer als bei einem kalten Akkumulator sein. Die Zeit, über die der Abfall der Klemmenspannung beobachtet wird, kann dementsprechend kürzer oder länger gewählt werden, je nachdem, ob der Akkumulator wärmer oder kälter ist.

Es ist besonders bevorzugt, dass der Ladestrom während des Bestimmens des zeitabhängigen Abfalls (im Schritt b) auf einen vorbestimmten Bruchteil des vor dem Erreichen des ersten Werts fließenden Ladestroms verändert wird. Beispielsweise kann der Ladestrom im Schritt b um ca. 10 %, ca. 20 % oder ca. 50 % geringer als im Schritt (a) sein. In einer weiteren Ausführungsform kann der Ladestrom während der Bestimmung auch auf Null abgesenkt werden. In noch einer weiteren Ausführungsform kann der Ladestrom auch erhöht sein.

In einer bevorzugten Ausführungsform wird der zweite Wert mittels eines Polynoms zweiten Grades aus dem zeitabhängigen Abfall bestimmt. Konstanten des Polynoms können beispielsweise empirisch bestimmt werden. Ein höherer Polynomgrad, insbesondere der dritte Grad, ist ebenfalls möglich.

In einer weiteren erfindungsgemäßen Variante des Verfahrens wird der zweite Wert in Abhängigkeit einer Temperatur des Akkumulators bestimmt. Mit steigender Temperatur des Akkumulators steigt üblicherweise auch die Klemmenspannung im Leerlauf. Durch das Berücksichtigen der Akkumulatortemperatur kann dieser Effekt berücksichtigt werden, so dass der Akkumulator unabhängig von seiner Temperatur vollständig aufgeladen werden kann.

In weiteren Ausführungsformen können auch weitere physikalische Parameter berücksichtigt werden, beispielsweise der zeitabhängige Spannungsabfall der Klemmenspannung, ein Innendruck der Zelle, eine geometrische Ausdehnung einer oder beider Elektroden des Akkumulators, das Potenzial der Kathode des Akkumulators oder das Potenzial der Anode des Akkumulators.

Allgemein ist bevorzugt, dass der in Schritt (d) fließende Ladestrom geringer als der in Schritt (a) fließende Ladestrom ist. Außerdem kann der in Schritt (d) fließende Ladestrom in Abhängigkeit einer Temperatur des Akkumulators bestimmt werden.

Das Laden in Schritt (d) wird bevorzugt beendet, falls ein Anstieg der Klemmenspannung einen vorbestimmten Schwellenwert übersteigt. Dadurch kann verhindert werden, dass der Akkumulator überladen wird, wodurch er platzen oder in Brand geraten könnte. Die Sicherheit des Ladeverfahrens kann dadurch weiter verbessert werden.

In noch einer weiteren Ausführungsform wird das Laden in Schritt (d) beendet, falls ein Anstieg einer Temperatur des Akkumulators einen vorbestimmten Schwellenwert übersteigt. Auch diese Maßnahme kann der Absicherung des Akkumulators gegenüber Laden dienen.

In noch einer weiteren Ausführungsform werden anschließend folgende Schritte ausgeführt: Beenden des Ladens des Akkumulators; Bestimmen, dass die Klemmenspannung einen vorbestimmten Wert unterschreitet; und Laden des Ackumulators mit einer vorbestimmten Ladespannung. Die vorbestimmte Ladespannung kann insbesondere dem vorbestimmten Wert entsprechen. Der vorbestimmte Wert kann insbesondere eine vom Hersteller des Akkumulators empfohlene Ladeschlussspannung umfassen. Durch die zusätzlich durchgeführten Schritte kann eine nicht ausgenutzte Kapazität des Akkumulators, die beispielsweise für Sicherheitsmargen, zur Kompensation einer Messunsicherheit oder einer Ungenauigkeit eines verwendeten mathematischen Modells verwendet wurde, ausgenutzt werden. Die im Akkumulator gespeicherte Energie kann dadurch weiter erhöht werden.

Ein Computerprogrammprodukt umfasst Programmcodemittel zur Durchführung des oben beschriebenen Verfahrens, wenn das Computerprogrammprodukt auf einer Verarbeitungseinrichtung abläuft oder auf einem computerlesbaren Datenträger gespeichert ist.

Eine Vorrichtung zur Aufladung eines Akkumulators mit Klemmen, an denen eine Klemmenspannung anliegt, umfasst eine steuerbare Stromquelle, die dazu eingerichtet ist, eine vorbestimmte Spannung oder eine vorbestimmte elektrische Leistung an den Klemmen bereitzustellen; eine Abtasteinrichtung zur Bestimmung der Klemmenspannung; und eine Steuervorrichtung. Dabei ist die Steuervorrichtung dazu eingerichtet, ein Laden des Akkumulators mittels der Stromquelle zu steuern, bis die Klemmenspannung einen vorbestimmten ersten Wert erreicht hat; einen zeitabhängigen Abfall der Klemmenspannung des Akkumulators bei verändertem Ladestrom zu bestimmen; einen zweiten Wert auf der Basis des Spannungsverlusts zu bestimmen, wobei der zweite Wert größer als der erste Wert ist; und ein Laden des Akkumulators mittels der Stromquelle zu steuern, bis die Klemmenspannung des Akkumulators den zweiten Wert erreicht hat.

Die Vorrichtung kann insbesondere als Ladegerät aufgebaut sein. Die Steuervorrichtung kann eine Verarbeitungseinrichtung umfassen, die insbesondere als programmierbarer Mikrocomputer oder Mikrocontroller ausgebildet sein kann. Die Verarbeitungseinrichtung ist bevorzugt dazu eingerichtet, das oben beschriebene Verfahren ganz oder teilweise durchzuführen. Merkmale oder Vorteile des Verfahrens können daher auf die Vorrichtung übertragbar sein und umgekehrt.

In einer weiteren Ausführungsform umfasst die Vorrichtung ferner eine weitere Abtasteinrichtung zur Bestimmung einer Temperatur des Akkumulators. Die oben mit Bezug auf das Verfahren genannten Varianten, die eine Temperatur des Ackumulators verwenden, können so mittels der Steuervorrichtung, beziehungsweise ihrer Verarbeitungseinrichtung, durchgeführt werden.

Kurze Beschreibung der Figuren

Die Erfindung wird nun mit Bezug auf die beigefügten Figuren genauer beschrieben, in denen:

Fig. 1    einen schematischen Schaltplan einer Ladevorrichtung für einen Akkumulator;
Fig. 2    ein Ablaufdiagramm eines Verfahrens zum Laden eines Akkumulators;
Fig. 3    einen beispielhaften Ladeverlauf eines Akkumulators; und
Fig. 4    einen Spannungsverlauf an einem Akkumulator

darstellt.

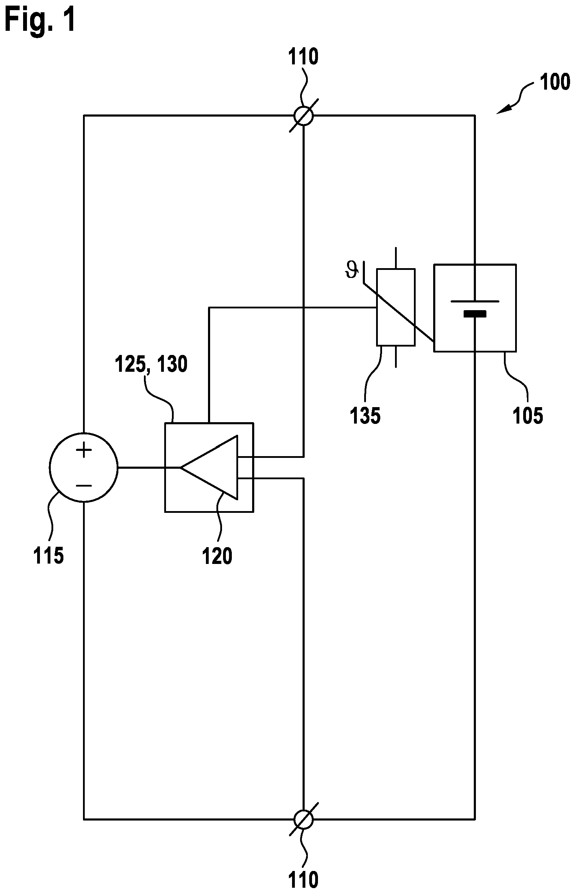

Fig. 1 zeigt einen schematischen Schaltplan einer Ladevorrichtung 100 für einen Akkumulator 105. Der Akkumulator 105 kann eine oder mehrere Zellen aufweisen, die nach dem gleichen elektrochemischen Prinzip arbeiten. Der Akkumulator 105 umfasst wenigstens zwei Klemmen 110 zwischen denen eine Klemmenspannung des Akkumulators 105 anliegt. Energie zwischen dem Akkumulator 105 und der Ladevorrichtung 100 oder einem Verbraucher (nicht dargestellt) erfolgt im Wesentlichen mittels eines Stroms durch die Klemmen 110. Zwischen den beiden Klemmen 110 liegt eine Klemmenspannung an.

Die Ladevorrichtung 100 umfasst eine steuerbare Stromquelle 115, die dazu eingerichtet ist, entweder eine konstante Spannung oder einen konstanten Strom an beziehungsweise durch die Klemmen 110 zu bewirken. Die Stromquelle 115 kann dazu eingerichtet sein, nur einen oder beide alternativ den einen oder den anderen Parameter zu steuern. Ferner umfasst die Ladevorrichtung 100 eine Abtasteinrichtung 120, die dazu eingerichtet ist, die Klemmenspannung an den Klemmen 110 beziehungsweise einen zeitabhängigen Abfall der Klemmenspannung zu bestimmen. Außerdem ist eine Steuervorrichtung 125 vorgesehen, die eine Verarbeitungseinrichtung 130 umfassen kann. Die Steuervorrichtung 125 ist dazu eingerichtet, den durch die Stromquelle 115 bereitgestellten Strom oder die durch die Stromquelle 115 bereitgestellte elektrische Leistung in Abhängigkeit der Klemmenspannung und gegebenenfalls noch weiterer Parameter zu steuern. Die Steuerung kann insbesondere zusätzlich in Abhängigkeit einer Temperatur des Akkumulators 105 gesteuert werden. Hierzu kann eine weitere Abtasteinrichtung 135 in Form eines Temperatursensors vorgesehen sein, wobei die Abtasteinrichtung 135 bevorzugt nahe am Akkumulator 105 beziehungsweise einer seiner Zellen angebracht ist. In einer Ausführungsform ist die Abtasteinrichtung 135 mit dem Akkumulator 105 integriert ausgeführt. Zwischen der Abtasteinrichtung 135 und der Steuervorrichtung 125 kann dann eine weitere Schnittstelle vorgesehen sein.

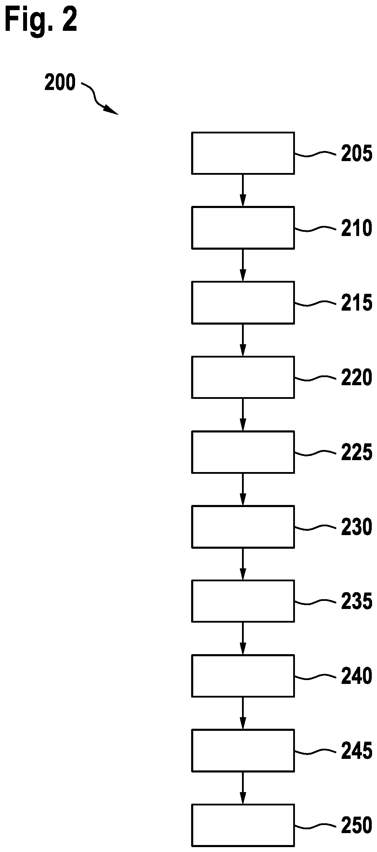

Fig. 2 zeigt ein Ablaufdiagramm eines Verfahrens zum Aufladen eines Akkumulators 105. Das Verfahren 200 kann insbesondere mittels der Steuervorrichtung 125 beziehungsweise deren Verarbeitungseinrichtung 130 ausgeführt werden. Dazu kann das Verfahren 200 insbesondere in Form eines Computerprogrammprodukts vorliegen. Einzelne Schritte des Verfahrens 200 können in unterschiedlichen Varianten durchgeführt werden, so dass sich eine große Vielzahl von Kombinationsmöglichkeiten ergeben kann. Die einzelnen Varianten werden im Folgenden mit Bezug auf die einzelnen Schritte genauer erläutert. Ein Fachmann kann die einzelnen Varianten oder Wahlmöglichkeiten passend miteinander kombinieren, um ein Verfahren 200 zusammenzustellen, das seinen Anforderungen genügt.

In einem Schritt 205 wird der Akkumulator 105 elektrisch aufgeladen. Dazu können alternativ ein vorbestimmter konstanter Strom oder eine vorbestimmte konstante Leistung durch den Akkumulator 105 gesteuert werden. Ladestrom oder Ladeleistung können insbesondere einer Vorgabe eines Herstellers des Akkumulators 105 folgen. Derartige Empfehlungen liegen für praktisch alle bekannten Akkumulatoren 105 vor. Das Aufladen kann durchgeführt werden, bis die Klemmenspannung einen vorbestimmten ersten Wert erreicht hat. Dieser erste Wert kann beispielsweise als Ladeschlussspannung vom Hersteller des Akkumulators vorgegeben sein, beispielsweise 4,2 V. Es kann auch eine gegenüber dieser Empfehlung veränderte und insbesondere verringerte Ladeschlussspannung verwendet werden, beispielsweise ca. 4,1 V. Erreicht die Klemmenspannung die veränderte Ladeschlussspannung, so kann der Akkumulator 105 anschließend weiter mit einem vorbestimmten Strom geladen werden, bis die Klemmenspannung den vorbestimmten ersten Wert erreicht hat. Der Ladestrom kann wieder einer Empfehlung des Herstellers des Akkumulators 105 folgen.

In einem Schritt 210 wird der durch die Klemmen 110 bewirkte Ladestrom verändert. Beispielsweise kann der Strom reduziert werden, beispielsweise um ca. 40 bis 60 %, weiter bevorzugt ca. 50 %, in einer anderen Ausführungsform kann der Strom jedoch auch erhöht werden, beispielsweise um ca. 5 bis 20 %, weiter bevorzugt ca. 10 %. In noch einer weiteren Ausführungsform kann der Strom auch um 100 % reduziert und damit auf Null abgesenkt werden.

Die Klemmenspannung zu Beginn des zweiten Schritts 210 ist bekannt. Nach einer vorbestimmten Pause, die beispielsweise im Bereich einiger 10 bis einiger 100 ms liegen kann, beispielsweise bei ca. 150 ms, wird die Klemmenspannung des Akkumulators 105 erneut abgetastet. Die Zeit zwischen dem Verändern des Ladestroms und dem erneuten Abtasten der Klemmenspannung wird gemäß einer Definition in den unabhängigen Ansprüchen in Abhängigkeit der Temperatur des Akkumulators 105 bestimmt. Die Temperatur wird bevorzugt mittels der Abtasteinrichtung 135 bestimmt. Die Wartezeit wird hier mit $t_1$ bezeichnet. Die Klemmenspannung nach der Wartezeit wird mit $U(t_1)$ bezeichnet.

In einem vierten Schritt 220 wird auf der Basis der beiden Spannungen ein Spannungsabfall ermittelt:

$$\Delta U_{Ri} = U_{Ladeschluss} - U(t_1) \qquad \text{(Gleichung 1)}$$

Der Spannungsabfall ist eine Hilfsgröße, die üblicherweise mit einem Ohm'schen Innenwiderstand des Akkumulators 105 korreliert.

In einem fünften Schritt 225 wird ein zweiter Wert $U_0$ bestimmt, auf den der Ackumulator 105 im Folgenden aufgeladen werden soll. Die Bestimmung erfolgt auf der Basis des Spannungsabfall von Gleichung 1 und kann beispielsweise polynomial wie folgt bestimmt werden:

$$U_0(\Delta U_{Ri}) = 16{,}78 \cdot \Delta U_{Ri}^2 - 2{,}80 \cdot \Delta U_{Ri} + 4{,}55V \qquad \text{(Gleichung 2)}$$

Die hierbei verwendeten Konstanten können beispielsweise empirisch bezüglich eines Akkumulators 105 oder eines Typs von Akkumulatoren 105 bestimmt werden. Die angegebene Formel verwendet beispielhafte, gerundete Konstanten. Der bestimmte zweite Wert kann auf Plausibilität überprüft und insbesondere auf einen vorbestimmten maximalen Wert begrenzt werden.

Gemäß einer weiteren Definition in den unabhängigen Ansprüchen kann der zweite Wert $U_0$ unter Berücksichtigung der Temperatur des Akkumulators 105 bestimmt werden wie in folgender, beispielhafter Gleichung:

$$U_0(\Delta U_{Ri}) = 16{,}78 \cdot \Delta U_{Ri}^2 - 2{,}80 \cdot \Delta U_{Ri} + 4{,}55V - \left| T_z - 23°C \right| \cdot 0{,}001V \quad \text{(Gleichung 3)}$$

In einer weiteren Ausführungsform kann auch ein Polynom höherer Ordnung gewählt werden, beispielsweise der Ordnung 3 oder 4. Außerdem kann der zweite Wert $U_0$ auch auf eine andere Weise auf der Basis des Spannungsabfalls von Formel 1 bestimmt werden. Dazu kann ein mathematisches Modell verwendet werden, in das unterschiedliche physikalische Parameter eingehen können, beispielsweise der oben beschriebene Spannungsabfall, die Temperatur des Akkumulators 105, der Innendruck des Akkumulators 105, die geometrische Ausdehnung einer oder beider Elektroden des Akkumulators 105, das Potenzial der Kathode oder das Potenzial der Anode des Akkumulators 105.

In einem sechsten Schritt 230 wird der Akkumulator 105 weiter geladen, bis seine Klemmenspannung dem in Schritt 225 bestimmten zweiten Wert entspricht. Dazu kann der gleiche Strom wie oben im Schritt 1 oder ein geringerer Strom durch den Akkumulator 105 bewirkt werden. In einer weiteren Variante wird die Temperatur des Akkumulators 105 erfasst und der Ladestrom in Abhängigkeit der Temperatur bestimmt. Beispielsweise kann folgender Ladestrom verwendet werden:

$$I = I_{max} - k1 \cdot \left| Tz - 23°C \right| - k2 \cdot (U_0 - 5{,}25V) \qquad \text{(Gleichung 4)}$$

mit:

| | |
|---|---|
| $I_{max}$ | vorbestimmter Ladestrom, insbesondere nach Empfehlung des Herstellers des Akkumulators 105 |
| $U_0$ | in Schritt 225 bestimmter zweiter Wert (zweite Ladeschlussspannung); |
| $Tz$ | Temperatur des Akkumulators 105; |
| $k1$ | Korrekturfaktor 1, z. B. $I_{max}$ * 0,01 * 1 / °C |
| $k2$ | Korrekturfaktor 2, z. B. $I_{max}$ * 0,05 * 1 / 0,01V |

Die weiteren in Gleichung 4 angegebenen Konstanten repräsentieren ungefähre Werte des oben angesprochenen Beispiels. Diese Konstanten können insbesondere empirisch bestimmt werden.

Während des Weiterladens des Akkumulators 105 im sechsten Schritt 230 kann die Klemmenspannung kontinuierlich überwacht werden. Insbesondere kann bestimmt werden, wie schnell die Klemmenspannung über die Zeit ansteigt. Übersteigt diese Geschwindigkeit einen vorbestimmten Schwellenwert, so kann das Laden im Schritt 230 beendet werden.

In einer weiteren Ausführungsform kann auch die Temperatur des Akkumulators 105 überwacht werden. Die Temperatur des Akkumulators 105 steigt üblicherweise durch den Ladevorgang an. Übersteigt die Geschwindigkeit des Temperaturanstiegs des Akkumulators 105 einen vorbestimmten Schwellenwert, so kann das Laden im Schritt 230 ebenfalls beendet werden.

In einem siebten Schritt 235 kann der durch den Akkumulator 105 fließende Strom abgeschaltet werden. Außerdem kann das Ende des Ladevorgang signalisiert werden, beispielsweise an einen Benutzer oder eine andere Steuervorrichtung. Das Signal kann logischer, akustischer, optischer oder haptischer Natur sein.

Optional wird in einem achten Schritt 240 die Klemmenspannung des Akkumulators 105 nach dem Abschalten des Ladestroms weiter überwacht. Sinkt die Klemmenspannung unter einen vorbestimmten Wert, der insbesondere einer Ladeschlussspannung des Akkumulators 105 entsprechen kann, so kann der Ackumulator in einem neunten Schritt 245 mit einer konstanten Spannung weitergeladen werden. Die konstante Spannung kann insbesondere der im Schritt 240 verwendeten Ladeschlussspannung entsprechen. Dies hat den Vorteil, dass eine Kapazität des Akkumulators 105 ausgenutzt werden kann, die beispielsweise aufgrund von Sicherheitsmargen, einer Messunsicherheit oder einer Unsicherheit in einem verwendeten mathematischen Modell ansonsten nicht zur Verfügung steht.

Der Ladestrom kann in einem zehnten Schritt 250 abgeschaltet werden, wenn eine vorbestimmte Ladedauer erreicht oder der durch den Akkumulator 105 fließende Ladestrom einen vorbestimmten Wert erreicht hat.

Umfasst der Akkumulator 105 mehr als eine Zelle, so können im dritten Schritt 215 Betriebszustände für jede einzelne Zelle gemessen werden. Im zweiten Schritt 210 wird der Strom bevorzugt für den gesamten Akkumulator 105 abgeschaltet. Im fünften Schritt 225 wird der zweite Wert bevorzugt bezüglich jeder einzelnen Zelle berechnet. Im siebten Schritt 235 kann das Laden beendet werden, sobald die erste Zelle ihr individuelles Abschaltkriterium erreicht.

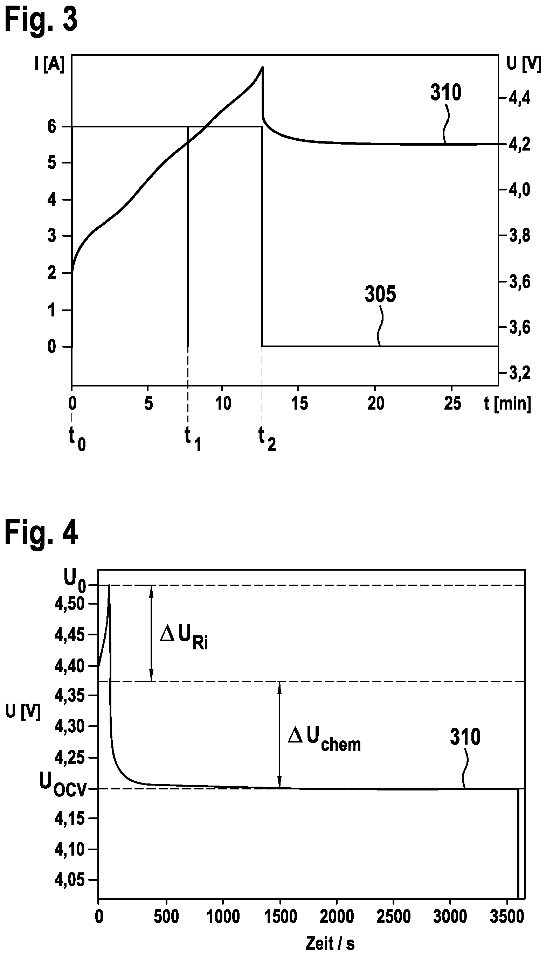

Fig. 3 zeigt einen beispielhaften Ladeverlauf eines Akkumulators 105 während eines Ladevorgang mittels eines Verfahrens 200 nach Fig. 2. Die dargestellten Verläufe und numerischen Werte sind als beispielhaft zu betrachten. In horizontaler Richtung ist eine Zeit in Minuten angegeben. In vertikaler Richtung sind ein Ladestrom und eine Klemmenspannung eingetragen. Ein erster Verlauf 305 betrifft den Ladestrom und ein zweiter Verlauf 310 die Klemmenspannung.

Ausgehend von einem Zeitpunkt $t_0$ wird der Akkumulator 105 mit einem konstanten Ladestrom aufgeladen. Seine Klemmenspannung steigt dabei zumindest in einem vorbestimmten Bereich im Wesentlichen linear an. Zu einem Zeitpunkt $t_1$ erreicht die Klemmenspannung einen vorbestimmten ersten Wert. Der Ladestrom wird vorübergehend abgeschaltet oder anderweitig verändert und die Veränderung der Klemmenspannung in Antwort auf die Veränderung des Ladestroms wird bestimmt. Dieser Vorgang entspricht den Schritten 210 bis 225 des oben beschriebenen Verfahrens 200.

Anschließend wird der Akkumulator 105 weiter geladen (vergleiche Schritt 230) bis die Klemmenspannung bis zu einem Zeitpunkt $t_2$ den zuvor bestimmten zweiten Wert erreicht hat.

Bei abgeschaltetem Ladestrom sinkt die Klemmenspannung idealerweise auf einen vorbestimmten Wert ab, der die maximale Ausnutzung der Kapazität des Ackumulators 105 kennzeichnet.

Fig. 4 zeigt einen beispielhaften Spannungsverlauf an einem Akkumulator 105. In vertikaler Richtung ist eine Klemmenspannung und in horizontaler Richtung eine Zeit eingetragen. Der dargestellte Vorgang ist in Fig. 3 in einem Bereich von kurz vor dem Zeitpunkt $t_2$ bis zum Ende des Diagramms dargestellt.

Der dargestellte Verlauf 310 der Klemmenspannung gibt einen Eindruck des Verhaltens eines exemplarischen Akkumulators 105. Das Absinken der Klemmenspannung setzt sich zusammen aus einem Ohm'schen Spannungsabfall $\Delta U_{Ri}$ und einem chemischen Spannungsabfall $\Delta U_{chem}$.

**Patentansprüche**

1. Verfahren (200) zum Aufladen eines Akkumulators (105)

   mit Klemmen, an denen eine Klemmenspannung anliegt, wobei das Verfahren (200) folgende Schritte umfasst:

   a. Laden (205) des Akkumulators (105) mittels eines vorbestimmten Stroms oder einer vorbestimmten elektrischen Leistung, bis die Klemmenspannung einen vorbestimmten ersten Wert erreicht hat;
   b. Bestimmen (210-220) eines zeitabhängigen Abfalls der Klemmenspannung des Akkumulators (105) bei verändertem Ladestrom;
   c. Bestimmen (225) eines zweiten Werts der Klemmenspannung auf der Basis des Spannungsverlusts, wobei der zweite Wert größer als der erste Wert ist; und
   d. Laden (230) des Akkumulators (105) mittels eines vorbestimmten Stroms oder einer vorbestimmten elektrischen Leistung, bis die Klemmenspannung des Akkumulators (105) den zweiten Wert erreicht hat;

   **dadurch gekennzeichnet, dass**
   der zeitabhängige Abfall der Klemmenspannung über eine Zeit bestimmt (210-220) wird, die von einer Temperatur des Akkumulators (105) abhängig ist und/oder der zweite Wert in Abhängigkeit einer Temperatur des Akkumulators (105) bestimmt wird.

2. Verfahren (200) nach Anspruch 1, wobei der erste Wert einer vom Hersteller des Akkumulators (105) empfohlenen Ladeschlussspannung für das CC/CV-Ladeverfahren (200) entspricht.

3. Verfahren (200) nach einem der vorhergehenden Ansprüche, wobei der zeitabhängige Abfall der Klemmenspannung übei eine Zeit im Bereich von ca. 100 ms bis ca. 1,5 s oder einiger 10 bis einiger 100 ms ermittelt wird.

4. Verfahren (200) nach einem der vorangehenden Ansprüche, wobei der Ladestrom während des Bestimmens (210-220) des zeitabhängigen Abfalls auf einen vorbestimmten Bruchteil des vor dem Erreichen des ersten Werts fließenden Ladestroms verringert wird.

5. Verfahren (200) nach einem der vorangehenden Ansprüche, wobei der zweite Wert mittels eines Polynoms zweiten Grades oder einem Polynom höherer Ordnung aus dem zeitabhängigen Abfall bestimmt (225) wird.

6. Verfahren (200) nach einem der vorangehenden Ansprüche, wobei der in Schritt d. (230) fließende Ladestrom geringer als der in Schritt a. (205) fließende Ladestrom ist.

7. Verfahren (200) nach einem der vorangehenden Ansprüche, wobei der in Schritt d. (230) fließende Ladestrom in Abhängigkeit einer Temperatur des Akkumulators (105) bestimmt (210-220) wird.

8. Verfahren (200) nach einem der vorangehenden Ansprüche, wobei das Laden in Schritt d. beendet wird, falls ein Anstieg der Klemmenspannung einen vorbestimmten Schwellenwert übersteigt.

9. Verfahren (200) nach einem der vorangehenden Ansprüche, wobei das Laden in Schritt d. (230) beendet wird, falls ein Anstieg einer Temperatur des Akkumulators (105) einen vorbestimmten Schwellenwert übersteigt.

10. Verfahren (200) nach einem der vorangehenden Ansprüche, ferner umfassend nachfolgende Schritte:

   - Beenden (235) des Ladens des Akkumulators (105);
   - Bestimmen (240), dass die Klemmenspannung einen vorbestimmten Wert unterschreitet; und
   - Laden (245) des Akkumulators (105) mit einer Ladespannung des vorbestimmten Werts.

11. Computerprogrammprodukt mit Programmcodemitteln zur Durchführung des Verfahrens (200) nach einem der vorangehenden Ansprüche, wenn das Computerprogrammprodukt auf einer Verarbeitungseinrichtung (130) abläuft.

12. Vorrichtung (100) zur Aufladung eines Akkumulators (105) mit Klemmen (110), an denen eine Klemmenspannung anliegt, wobei die Vorrichtung folgendes umfasst:

   - eine steuerbare Stromquelle (115), die dazu eingerichtet ist, eine vorbestimmte Spannung oder eine vorbestimmte elektrische Leistung an den Klemmen (110) bereitzustellen;
   - eine Abtasteinrichtung (120) zur Bestimmung der Klemmenspannung; und
   - eine Steuervorrichtung (125), die dazu eingerichtet ist:

      ▪ ein Laden des Akkumulators (105) mittels der Stromquelle zu steuern, bis die Klemmenspannung einen vorbestimmten ersten Wert erreicht hat;
      ▪ einen zeitabhängigen Abfall der Klemmenspannung des Akkumulators (105) bei verändertem Ladestrom zu bestimmen;
      ▪ einen zweiten Wert der Klemmenspannung auf der Basis des Spannungsverlusts zu bestimmen, wobei der zweite Wert größer als der erste Wert ist; und
      ▪ ein Laden des Akkumulators (105) mittels der Stromquelle zu steuern, bis die Klemmenspannung des Akkumulators (105) den zweiten Wert erreicht hat;

   dadurch gekennzeichnet, dass der zeitabhängige Abfall der Klemmenspannung über eine Zeit bestimmt (210-220) wird, die von einer Temperatur des Akkumulators (105) abhängig ist und/oder der zweite Wert in Abhängigkeit einer Temperatur des Akkumulators (105) bestimmt wird.

13. Vorrichtung nach Anspruch 12, ferner umfassend eine weitere Abtasteinrichtung (135) zur Bestimmung einer Temperatur des Akkumulators (105).

**Claims**

1. Method (200) for charging a rechargeable battery (105) having terminals, to which a terminal voltage is applied, wherein the method (200) comprises the following steps:

   a. charging (205) the rechargeable battery (105) by means of a predetermined current or a predetermined electrical power until the terminal voltage has reached a predetermined first value;
   b. determining (210-220) a time-dependent drop in the terminal voltage of the rechargeable battery (105) when the charging current changes;
   c. determining (225) a second value of the terminal voltage based on the voltage loss, wherein the second value is greater than the first value; and
   d. charging (230) the rechargeable battery (105) by means of a predetermined current or a predetermined electrical power until the terminal voltage of the rechargeable battery (105) has reached the second value; **characterized in that**

   the time-dependent drop in the terminal voltage is determined (210-220) over a time which is dependent on a temperature of the rechargeable battery (105) and/or the second value is determined depending on a temperature of the rechargeable battery (105).

2. Method (200) according to Claim 1, wherein the first value corresponds to an end-of-charge voltage recommended by the manufacturer of the rechargeable battery (105) for the CC/CV charging method (200).

3. Method (200) according to either of the preceding claims, wherein the time-dependent drop in the terminal voltage is identified over a time in the range of from approximately 100 ms to approximately 1.5 s or a few 10 to a few 100 ms.

4. Method (200) according to any one of the preceding claims, wherein, while the time-dependent drop is being determined (210-220), the charging current is reduced to a predetermined fraction of the charging current flowing before the first value is reached.

5. Method (200) according to any one of the preceding claims, wherein the second value is determined (225) from the time-dependent drop by means of a second-degree polynomial or a higher-order polynomial.

6. Method (200) according to any one of the preceding claims, wherein the charging current flowing in step d. (230) is lower than the charging current flowing in step a. (205).

7. Method (200) according to any one of the preceding claims, wherein the charging current flowing in step d. (230) is determined (210-220) depending on a temperature of the rechargeable battery (105).

8. Method (200) according to any one of the preceding claims, wherein the charging in step d. is ended if an increase in the terminal voltage exceeds a predetermined threshold value.

9. Method (200) according to any one of the preceding claims, wherein the charging in step d. (230) is ended if an increase in the temperature of the rechargeable battery (105) exceeds a predetermined threshold value.

10. Method (200) according to any one of the preceding claims, further comprising the following steps:

    - ending (235) the charging of the rechargeable battery (105);
    - determining (240) that the terminal voltage has fallen below a predetermined value; and
    - charging (245) the rechargeable battery (105) with a charging voltage of the predetermined value.

11. Computer program product containing program code means for performing the method (200) according to one of the preceding claims when the computer program product runs on a processing device (130).

12. Apparatus (100) for charging a rechargeable battery (105) having terminals (110) to which a terminal voltage is applied, wherein the apparatus comprises the following:

- a controllable current source (115) which is set up to provide a predetermined voltage or a predetermined electrical power at the terminals (110);
- a sampling device (120) for determining the terminal voltage; and
- a control apparatus (125) which is set up to:

  ▪ control charging of the rechargeable battery (105) by means of the current source until the terminal voltage has reached a predetermined first value;
  ▪ determine a time-dependent drop in the terminal voltage of the rechargeable battery (105) when the charging current changes;
  ▪ determine a second value of the terminal voltage based on the voltage loss, wherein the second value is greater than the first value; and
  ▪ control charging of the rechargeable battery (105) by means of the current source until the terminal voltage of the rechargeable battery (105) has reached the second value;

**characterized in that**
the time-dependent drop in the terminal voltage is determined (210-220) over a time which is dependent on a temperature of the rechargeable battery (105) and/or the second value is determined depending on a temperature of the rechargeable battery (105).

13. Apparatus according to Claim 12, further comprising another sampling device (135) for determining a temperature of the rechargeable battery (105).


**Revendications**

1. Procédé (200) permettant de recharger un accumulateur (105) comprenant des bornes auxquelles est appliquée une tension aux bornes, le procédé (200) comprenant les étapes suivantes consistant à :

   a) charger (205) l'accumulateur (105) au moyen d'un courant prédéterminé ou d'une puissance électrique prédéterminée jusqu'à ce que la tension aux bornes ait atteint une première valeur prédéterminée ;
   b) déterminer (210-220) une chute dépendant du temps de la tension aux bornes de l'accumulateur (105) en cas de courant de charge modifié ;
   c) déterminer (225) une deuxième valeur de la tension aux bornes sur la base de la perte de tension, la deuxième valeur étant supérieure à la première valeur ; et
   d) charger (230) l'accumulateur (105) au moyen d'un courant prédéterminé ou d'une puissance électrique prédéterminée jusqu'à ce que la tension aux bornes de l'accumulateur (105) ait atteint la deuxième valeur ;
   **caractérisé en ce que**

   la chute dépendant du temps de la tension aux bornes est déterminée pendant un temps (210-220) qui dépend d'une température de l'accumulateur (105), et/ou la deuxième valeur est déterminée en fonction d'une température de l'accumulateur (105).

2. Procédé (200) selon la revendication 1, dans lequel la première valeur correspond à une tension de fin de charge recommandée par le fabricant de l'accumulateur (105) pour le procédé de charge CCCV (200).

3. Procédé (200) selon l'une quelconque des revendications précédentes, dans lequel la chute dépendant du temps de la tension aux bornes est établie pendant un temps dans une plage d'environ 100 ms à environ 1,5 s ou de quelques 10 à quelques 100 ms.

4. Procédé (200) selon l'une quelconque des revendications précédentes, dans lequel, pendant la détermination (210-220) de la chute dépendant du temps, le courant de charge est diminué à une fraction prédéterminée du courant de charge circulant avant que la première valeur ne soit atteinte.

5. Procédé (200) selon l'une quelconque des revendications précédentes, dans lequel la deuxième valeur est déterminée au moyen d'un polynôme du second degré ou d'un polynôme d'ordre supérieur d'après la chute dépendant du temps (225).

6. Procédé (200) selon l'une quelconque des revendications précédentes, dans lequel le courant de charge circulant à l'étape d) (230) est inférieur au courant de charge circulant à l'étape a) (205).

7. Procédé (200) selon l'une quelconque des revendications précédentes, dans lequel le courant de charge circulant à l'étape d) (230) est déterminé (210-220) en fonction de la température de l'accumulateur (105) .

8. Procédé (200) selon l'une quelconque des revendications précédentes, dans lequel la charge à l'étape d) est terminée si une montée de la tension aux bornes dépasse une valeur seuil prédéterminée.

9. Procédé (200) selon l'une quelconque des revendications précédentes, dans lequel la charge à l'étape d) (230) est terminée si une montée de la température de l'accumulateur (105) dépasse une valeur seuil prédéterminée.

10. Procédé (200) selon l'une quelconque des revendications précédentes, comprenant en outre les étapes suivantes consistant à :

    - terminer (235) la charge de l'accumulateur (105) ;
    - déterminer (240) que la tension aux bornes est inférieure à une valeur prédéterminée ; et
    - charger (245) l'accumulateur (105) avec une tension de charge de la valeur prédéterminée.

11. Produit de programme informatique comprenant des moyens de code programme pour exécuter le procédé (200) selon l'une quelconque des revendications précédentes si le produit de programme informatique est exécuté sur un dispositif de traitement (130).

12. Dispositif (100) permettant de recharger un accumulateur (105) comprenant des bornes (110) auxquelles est appliquée une tension aux bornes, le dispositif comprenant :

    - une source de courant (115) pouvant être commandée et qui est conçue pour fournir une tension prédéterminée ou une puissance électrique prédéterminée aux bornes (110) ;
    - un dispositif de balayage (120) pour déterminer la tension aux bornes ; et
    - un dispositif de commande (125) qui est conçu pour :

        ▪ commander une charge de l'accumulateur (105) au moyen de la source de courant jusqu'à ce que la tension aux bornes ait atteint une première valeur prédéterminée ;
        ▪ déterminer une chute dépendant du temps de la tension aux bornes de l'accumulateur (105) en cas de courant de charge modifié ;
        ▪ déterminer une deuxième valeur de la tension aux bornes sur la base de la perte de tension, la deuxième valeur étant supérieure à la première valeur ; et
        ▪ commander une charge de l'accumulateur (105) au moyen de la source de courant jusqu'à ce que la tension aux bornes de l'accumulateur (105) ait atteint la deuxième valeur ;

    **caractérisé en ce que**
    la chute dépendant du temps de la tension aux bornes est déterminée pendant un temps (210-220) qui dépend d'une température de l'accumulateur (105), et/ou la deuxième valeur est déterminée en fonction d'une température de l'accumulateur (105).

13. Dispositif selon la revendication 12, comprenant en outre un dispositif de balayage supplémentaire (135) pour déterminer une température de l'accumulateur (105).

# Fig. 1

**Fig. 2**

200

205

210

215

220

225

230

235

240

245

250

# Fig. 3

# Fig. 4

**IN DER BESCHREIBUNG AUFGEFÜHRTE DOKUMENTE**

**In der Beschreibung aufgeführte Patentdokumente**

- DE 102011107913 A1
- JP 2004282881 A
- US 2011156660 A1